(19) Europäisches Patentamt
European Patent Office
Office européen des brevets

(11) **EP 4 227 045 A1**

(12) **EUROPEAN PATENT APPLICATION**

(43) Date of publication:
**16.08.2023 Bulletin 2023/33**

(21) Application number: **23156255.4**

(22) Date of filing: **13.02.2023**

(51) International Patent Classification (IPC):
***B25J 9/16*** *(2006.01)*

(52) Cooperative Patent Classification (CPC):
**B25J 9/1697;** G05B 2219/37097;
G05B 2219/40584; G05B 2219/45117

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.02.2022 KR 20220018483
25.02.2022 KR 20220025231**

(71) Applicant: **JVM Co., Ltd.
Daegu 42709 (KR)**

(72) Inventors:
• **KIM, Sang Wook**
  **42709 Daegu (KR)**
• **LEE, Sang Hun**
  **42709 Daegu (KR)**
• **JUNG, Yong Uk**
  **42709 Daegu (KR)**
• **LEE, Ho Myoung**
  **42709 Daegu (KR)**

(74) Representative: **Ter Meer Steinmeister & Partner
Patentanwälte mbB
Nymphenburger Straße 4
80335 München (DE)**

(54) **ROBOT ARM CONTROL SYSTEM OF AUTOMATED MEDICATION DISPENSING APPARATUS AND CONTROL METHOD THEREOF**

(57) Disclosed herein is a robot arm control system of an automated medication dispensing apparatus, which includes a robot arm; a storage configured to store a mounting position of each of a plurality of medication cassettes, an operation control value of the robot arm for moving to the mounting position, and a reference position at which the marker is attached to each medication cassette in a medication cassette storage unit where a plurality of racks in which the plurality of medication cassettes with markers attached thereto are mounted are arranged; a camera configured to capture the marker attached to the medication cassette; and a control unit configured to control the robot arm to move to a mounting position of any one among the medication cassettes to unload the medication cassette.

FIG.9

START

STORE MOUNTING POSITION OF EACH MEDICATION CASSETTE, OPERATION CONTROL VALUE OF ROBOT ARM, AND REFERENCE POSITION OF MARKER — S910

CAPTURE MARKER ATTACHED TO MEDICATION CASSETTE — S920

CALCULATE DIFFERENCE VALUE BETWEEN STORED REFERENCE POSITION OF MARKER AND DETECTED POSITION OF MARKER IN CAPTURED IMAGE — S930

CORRECT OPERATION CONTROL VALUE OF ROBOT ARM TO CORRESPOND TO CALCULATED DIFFERENCE VALUE — S940

END

EP 4 227 045 A1

Description

CROSS-REFERENCE TO RELATED APPLICATION

This application claims priority to and the benefit of Korean Patent Application No. 2022-0018483, filed on February 11, 2022 and No. 2022-0025231, filed on February 25, 2022, the disclosure of which is incorporated herein by reference in its entirety.

BACKGROUND

1. Field of the Invention

The present invention relates to a robot arm control system of an automated medication dispensing apparatus and a control method thereof, and more particularly, to a robot arm control system of an automated medication dispensing apparatus, which is capable of automatically dispensing a medication from a necessary medication cassette through a robot arm, and a control method thereof.

2. Discussion of Related Art

As disclosed in Korean Patent Laid-Open Application No. 10-2018-0117932, an automated medication dispensing apparatus such as a medication packaging device is generally an apparatus for automatically dispensing medications from a plurality of medication cassettes in which the medications are stored according to medication dispensing information such as a prescription and then packaging a one-time dose of the medication in a pharmaceutical wrapper.

This automated medication dispensing apparatus finally packages the medications in pharmaceutical wrappers through a series of processes and distributes the medications packaged in the pharmaceutical wrappers to each patient or ward.

The automated medication dispensing apparatus is formed such that a plurality of medication cassettes are disposed in a limited space provided at an upper portion of a main body, and a medication that needs dispensing is provided from the medication cassette or an empty medication cassette is replaced.

However, in this automated medication dispensing apparatus, due to a structure of the automated medication dispensing apparatus in which hundreds of medication cassettes are mounted in a rack of a medication cassette storage unit, a rack or the medication cassette is pushed to one side under the load of an adjacent rack or medication cassette so that a difference occurs between a home position of the medication cassette and an actual position of the medication cassette.

Thus, even when a robot arm moves to the home position of the medication cassette, there is a problem in that the medication cassette cannot be properly gripped or there is a risk of damage.

In addition, since the conventional medication packaging device is formed to place a plurality of medication cassettes in a limited space provided at an upper portion of a main body and receive medications that need dispensing through the medication cassettes, there is a problem in that a limitation in medication dispensing inevitably occurs due to the limitation of an accommodation space for mounting the medication cassettes.

This leads to the result that refilling work of refilling medications in the medication cassettes should be manually carried out from time to time, thereby reducing medication packaging efficiency.

For the above reasons, a large-scale medication packaging device is being developed, and in the large-scale medication packaging device, positional movement of the medication cassette by the robot arm should be performed in order to dispense a medication from the medication cassette.

However, in the process of moving the medication cassette by the robot arm in the conventional large medication packaging device, there is a problem that the medication cassette cannot not be fixed in an accurate position. Thus, a serious problem, such as the medication cassette falling during movement, occurred.

Therefore, there is an urgent need for research to maximize the efficiency of medication dispensing through accurate positional movement of medication cassettes in large medication packaging devices.

SUMMARY OF THE INVENTION

The present invention is directed to a robot arm control system of an automated medication dispensing apparatus, in which a robot arm can grip a medication cassette at a more accurate position, and a control method thereof.

The present invention is also directed to a mutual coupling structure for movement of a medication cassette, which facilitates positional movement of the medication cassette installed in the automated medication dispensing apparatus, prevents malfunction due to the medication cassette falling during the positional movement, and allows accurate medication dispensing according to a prescription, and an automated medication dispensing apparatus including the same.

According to an aspect of the present invention, there is provided a robot arm control system of an automated medication dispensing apparatus, which includes a robot arm; a storage unit configured to store a mounting position of each of a plurality of medication cassettes, an operation control value of the robot arm for moving to the mounting position, and a reference position at which the marker is attached to each medication cassette in a medication cassette storage unit where a plurality of racks in which the plurality of medication cassettes with markers attached thereto are mounted are arranged; a camera configured to capture the marker attached to the medication cassette; and a control unit configured to control the robot arm to move to a mounting position of any one among the medication cassettes to unload the medication cassette and control the robot arm to move and insert the unloaded medication cassette at a predetermined position for dispensing a medication in the unloaded medication cassette on the basis of the stored mounting position of each medication cassette, wherein the control unit calculates a difference value between a stored reference position of the marker and a detected position of the marker in the captured image for at least one medication cassette in which the image of the marker is captured by the camera, corrects the operation control value of the robot arm to correspond to the calculated difference value, and controls the robot arm to move to an actual mounting position of the medication cassette.

The control unit may calculate a difference value ($\Delta x=x_2-x_r$, $\Delta y=y_2-y_r$) for one predetermined point of the marker on the basis of pixel coordinates ($x_r$, $y_r$) of a reference position in a reference image and pixel coordinates ($x_2$, $y_2$) of the detected position in the captured image.

The one predetermined point of the marker may be any one among four vertexes of the marker when an edge of the marker has a quadrangular shape.

The medication cassette storage unit may include a frame which fixes the plurality of racks and to which at least one frame marker is attached and may further store a reference position at which the frame marker is attached to the frame, and the control unit may capture the frame marker through the camera, calculate a difference value between the stored reference position of the frame marker and a detected position at which the frame marker is detected in the captured image, and correct the operation control value of the robot arm to correspond to the calculated difference value.

The control unit may capture the frame marker only when the number of medication cassettes having a calculated difference value that is a predetermined difference value or more is greater than or equal to a predetermined number, and corrects the operation control value of the robot arm according to a position change of the frame.

When the unloaded medication cassette is moved to and inserted into one of a plurality of mounting holders included in a medication cassette unloader for discharging a medication accommodated in the medication cassette, the control unit may control a reading module included in the mounting holder to read medication data stored in a memory in the medication cassette, match the mounting position of the medication cassette in the medication cassette storage unit with the read medication data, and store the matching result.

The control unit may recognize an identification (ID) code attached to the medication cassette through the camera or read medication data stored in a memory of the medication cassette in a non-contact manner in which a radio-frequency ID (RFID) tag attached to the medication cassette is recognized through an RFID tag reader attached to the robot arm, and match the mounting position of the medication cassette with the read medication data to store the matching result.

According to an aspect of the present invention, there is provided a method of controlling a robot arm of an automated medication dispensing apparatus, which includes storing a mounting position of each of a plurality of medication cassettes, an operation control value of the robot arm for moving to the mounting position and unloading the medication cassette, and a reference position at which the marker is attached to each medication cassette in a medication cassette storage unit where a plurality of racks in which the plurality of medication cassettes with markers attached thereto are mounted are arranged; capturing the marker attached to the medication cassette through the camera; calculating a difference value between a stored reference position of the marker and a detected position of the marker in the captured image for at least one medication cassette in which the image of the marker is captured by the camera; and correcting the operation control value of the robot arm to correspond to the calculated difference value and moving the robot arm to an actual mounting position of the medication cassette.

The calculating of the difference value may include calculating a difference value ($\Delta x=x_2-x_r$, $\Delta y=y_2-y_r$) for one predetermined point of the marker on the basis of pixel coordinates ($x_r$, $y_r$) of a reference position in a reference image and pixel coordinates ($x_2$, $y_2$) of the detected position in the captured image.

The one predetermined point of the marker may be any one among four vertexes of the marker when an edge of the marker has a quadrangular shape.

The medication cassette storage unit may include a frame which fixes the plurality of racks and to which at least one frame marker is attached, and the method may further include storing a reference position at which the frame marker is attached to the frame, capturing the frame marker through the camera, calculating a difference value between the stored reference position of the frame marker and a detected position at which the frame marker is detected in the captured image, and correcting the operation control value of the robot arm to correspond to the calculated difference value.

The capturing of the frame marker may include capturing the frame marker only when the number of medication cassettes having a calculated difference value that is a predetermined difference value or more is greater than or equal to a predetermined number.

A mutual coupling structure for movement of a medication cassette may be a structure for implementing a specific purpose by moving the medication cassette positioned at a first position to a second position and may include the medication cassette, and a robot arm configured to grip the medication cassette positioned at the first position and then move the gripped medication cassette to the second position, a gripped portion which allows the robot arm to grip the same may be provided on an outer surface of the medication cassette, and the robot arm may approach the medication cassette positioned at the first position and enable fine position adjustment of the medication cassette in the process of gripping the gripped portion, thereby implementing the grip at a home position.

The robot arm may include a gripping part configured to move a position thereof toward the gripped portion and grip the gripped portion, and a support configured to support the gripping part and allow the gripping part to approach the medication cassette. The gripped portion may include a first gripped portion and a second gripped portion which are formed on a first outer surface and a second outer surface opposite to the first outer surface, respectively. The gripping part may include a first gripper and a second gripper which are moved toward the first gripped portion and the second gripped portion, respectively.

The robot arm may further include a guide inserted into a guide groove formed on a cover surface of the medication cassette to guide a final position at which the support should approach the medication cassette.

The first gripped portion may include a seating surface to which the position of the first gripper moves to be seated, first boundary protrusions formed to protrude from the first outer surface to define a boundary of the seating surface and implement an effect in that the first gripper is inserted and seated on the seating surface, and first auxiliary protrusions formed to protrude from positions spaced apart from the first boundary protrusions to allow insertion spaces to be formed between the first boundary protrusions. The first gripper may include an upper contact portion in contact with the seating surface positioned between the first boundary protrusions, and a lower contact portion integrally formed with the upper contact portion and in contact with the seating surface positioned between the insertion spaces.

One surface where the first boundary protrusion comes into contact with the upper contact portion may be formed to be inclined in a direction in which the upper contact portion is seated on the seating surface so that fine position adjustment of the gripping part is possible in a left-right direction of the medication cassette during the process in which the gripping part grips the gripped portion by contact.

The first gripper may further include a wing integrally formed with the lower contact portion and seated in the insertion space. When seated in the insertion space, positional movement of the wing in a vertical direction may be limited by the first boundary protrusion and the first auxiliary protrusion.

One surface where the first boundary protrusion comes into contact with the wing may be formed to be inclined in a direction in which the lower contact portion is seated on the seating surface so that fine position adjustment of the gripping part is possible in a vertical direction of the medication cassette during the process in which the gripping part grips the gripped portion by contact.

One surface where the wing comes into contact with the first auxiliary protrusion may be formed to be inclined in a direction in which the lower contact portion is seated on the seating surface so that fine position adjustment of the gripping part is possible in the vertical direction of the medication cassette during the process in which the gripping part grips the gripped portion by contact.

**BRIEF DESCRIPTION OF THE DRAWINGS**

In order to more fully understand the drawings described in the detailed description of the present invention, a brief description of each drawing is provided.

FIG. 1 is a diagram showing a schematic structure of an automated medication dispensing apparatus according to one embodiment of the present invention.

FIG. 2 is a photograph for describing a medication cassette storage unit and a medication cassette unloader, which are provided in the automated medication dispensing apparatus according to one embodiment of the present invention.

FIG. 3 is a photograph for describing a state in which medication cassettes are disposed in the medication cassette storage unit and the medication cassette unloader, which are provided in the automated medication dispensing apparatus according to one embodiment of the present invention.

FIG. 4 is a diagram for describing a process of dispensing a medication from the medication cassette and packaging the dispensed medication in the automated medication dispensing apparatus according to the present invention.

FIG. 5 is a schematic block diagram illustrating the components of the automated medication dispensing apparatus according to one embodiment of the present invention.

FIG. 6 is a diagram for describing a method of correcting an operation control value of a robot arm on the basis of a position of a marker according to one embodiment of the present invention.

FIG. 7 is a diagram illustrating the marker according to one embodiment of the present invention.

FIG. 8 is a diagram illustrating an example of a result of calculating a difference value between a reference position and a detected position of the marker according to one embodiment of the present invention.

FIG. 9 is a schematic flowchart for describing a control method of an automated medication dispensing apparatus according to one embodiment of the present invention.

FIG. 10 is a diagram for describing a mutual coupling structure for movement of the medication cassette provided in the automated medication dispensing apparatus according to one embodiment of the present invention.

FIG. 11 is a diagram for describing the medication cassette provided in the mutual coupling structure for movement of the medication cassette according to one embodiment of the present invention.

FIG. 12 is a diagram for describing the robot arm provided in the mutual coupling structure for movement of the medication cassette according to one embodiment of the present invention.

FIGS. 13 to 15 are diagrams for describing a situation in which the robot arm approaches and grips the medication cassette according to one embodiment of the present invention.

FIGS. 16 and 17 are diagrams for describing a situation in which a position of the medication cassette is finely adjusted when the medication cassette is gripped by the robot arm according to one embodiment of the present invention.

FIG. 18 is a diagram for describing a pivoting principle of a cover surface of the medication cassette provided in the mutual coupling structure for moving the medication cassette according to one embodiment of the present invention.

## DETAILED DESCRIPTION OF EXEMPLARY EMBODIMENTS

First, terms used in the present specification and the appended claims are selected as general terms in consideration of functions in various embodiments of the present invention. However, these terms may vary depending on the intentions of persons skilled in the art, legal or technical interpretations, and the emergence of new technologies. In addition, some terms may be terms arbitrarily selected by the applicant. These terms may be interpreted as the meanings defined in the present specification, and when there is no specific term definition, they may be interpreted on the basis of the overall content of the present specification and common technical knowledge in the art.

In addition, the same reference numerals or symbols in each drawing accompanying the present specification indicate parts or components that perform substantially the same function. For convenience of description and understanding, the same reference numerals or symbols will be used in different embodiments. That is, even when all components having the same reference numerals are shown in a plurality of drawings, the plurality of drawings do not mean a single embodiment.

In addition, in the present specification and the appended claims, terms including ordinal numbers such as "first" and "second" may be used to distinguish components. These ordinal numbers are used to distinguish the same or similar components from each other, and the meaning of the term should not be limitedly construed due to the use of these ordinal numbers. For example, components combined with such ordinal numbers should not be construed as limiting the order of use or arrangement by the ordinal number. The ordinal numbers may be used interchangeably, as necessary.

In the present specification, the singular forms include plural forms unless the context clearly indicates otherwise. It should be understood that the term "include" or "constitute" specifies the presence of stated features, numbers, steps, operations, elements, components, or a combination thereof, but does not preclude the possibility of the presence or addition of one or more another features, numbers, steps, operations, elements, components, or a combination thereof.

In addition, in embodiments of the present invention, when a part is to be connected to another part, this includes not only a direct connection but also an indirect connection through another medium. Further, when a part is referred to as "including" a component, this means that the part can include another a component, rather than excluding another component unless specifically stated otherwise.

Hereinafter, the present invention will be described in more detail with reference to the accompanying drawings.

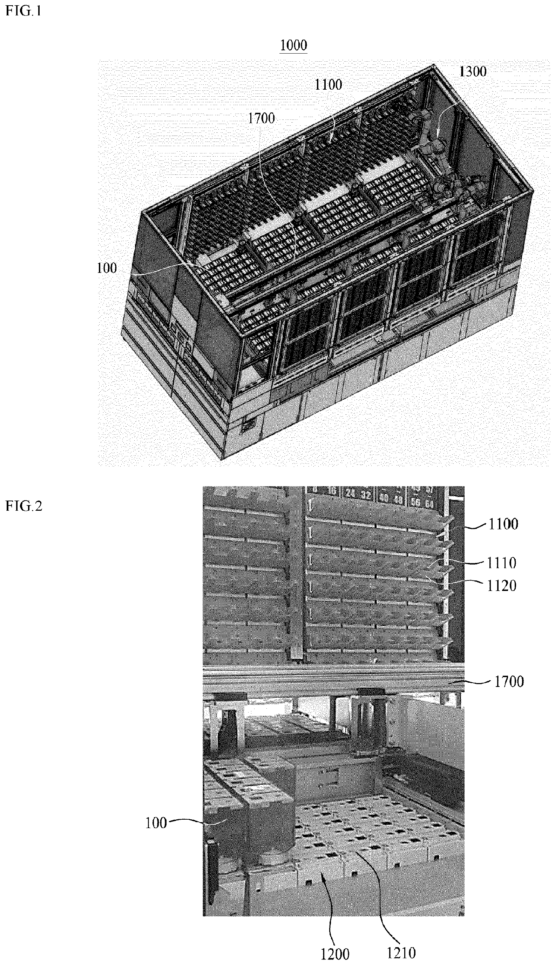

FIG. 1 is a diagram for describing an automated medication dispensing apparatus according to the present invention, and FIG. 2 is a photograph for describing a medication cassette storage unit and a medication cassette unloader, which are provided in the automated medication dispensing apparatus according to the present invention.

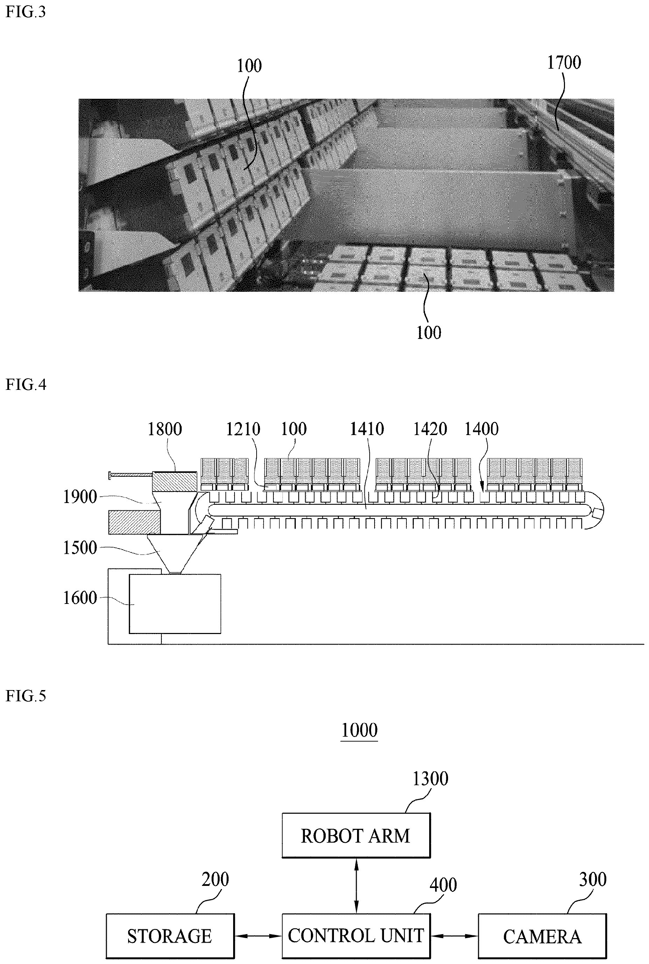

In addition, FIG. 3 is a photograph for describing a state in which medication cassettes are disposed in the medication cassette storage unit and the medication cassette unloader, which are provided in the automated medication dispensing apparatus according to the present invention, and FIG. 4 is a diagram for describing a process of dispensing a medication from the medication cassette and packaging the dispensed medication in the automated medication dispensing apparatus according to the present invention.

Referring to FIGS. 1 to 4, an automated medication dispensing apparatus 1000 according to the present invention may be an apparatus for allowing various medications to be dispensed from medication cassettes 100 in which the medications are stored individually on the basis of a medication dispensing request (e.g., a patient's prescription), and then packaging the dispensed medication in a pharmaceutical wrapper to be separately discharged by a one-time dose.

The automated medication dispensing apparatus 1000 may include medication cassette storage units 1100 for storing medication cassettes 100 accommodating specific medications are stored, medication cassette unloaders 1200 in which the medication cassette 100 moved from the medication cassette storage unit is loaded and which allow medications to be dispensed, and robot arms 1300 configured to move the medication cassettes 100 stored in the medication cassette storage unit to the medication cassette unloaders 1200.

When medications are dispensed from one or more medication cassettes 100 loaded on the medication cassette unloader 1200, as shown in FIG. 4, the medications are collected in a medication collector 1400 provided at a lower portion. The medications collected due to positional movement of the medication collector 1400 are collected in a medication collection hopper 1500, and then the medications are packaged by a one-time dose by a packaging process of a medication packaging unit 1600.

As shown in FIGS. 1 to 3, the medication cassette storage unit may be formed in a structure in which racks 1120 with storage regions 1110 formed in a plurality of rows and columns are arranged in a plurality of rows on an inner surface of the automated medication dispensing apparatus 1000.

As shown in FIG. 1, the medication cassette storage units 1100 may be provided on a left inner surface and a right inner surface of the automated medication dispensing apparatus 1000, but the present invention is not necessarily limited thereto, and the medication cassette storage unit may be provided on a rear inner surface of the automated medication dispensing apparatus 1000.

Alternatively, the medication cassette storage units 1100 may be provided in a plurality of layers toward an inner side on a specific inner surface. In this case, for the robot arm 1300 to access medication cassette storage units 1100 located relatively outside, medication cassette storage units 1100 located relatively inside may be provided in fewer numbers than the number of medication cassette storage units 1100 located outside, and positional movement thereof may be possible.

Meanwhile, as shown in FIG. 3, the medication cassette storage unit may support the medication cassettes 100 in a state of being inclined at a predetermined angle. Thus, a stable arrangement state of the medication cassettes 100 may be maintained and, simultaneously, the medication cassettes 100 may be easily accessed and gripped by the robot arm 1300.

The medication cassette 100 moved from the medication cassette storage unit by the robot arm 1300 is mounted, and thus the medication cassette unloader 1200 may perform a function of delivering medications stored in the medication cassette 100 to the medication collector 1400.

The medication cassette unloader 1200 may include a plurality of mounting holders 1210 for mounting the medication cassettes 100 thereon.

The mounting holder 1210 may be disposed in a matrix structure, and the mounting holder 1210 has a through-hole so that the medication dispensed from the medication cassette 100 mounted on the mounting holder 1210 may be supplied to the medication collector 1400 through the through-hole.

The medication cassette unloaders 1200 may be provided on both sides around a moving rail 1700 which allows the robot arm 1300 to move forward and backward, but present invention is not necessarily limited thereto.

Meanwhile, in order to dispense the medications contained in the medication cassette 100, the robot arm 1300 for moving the medication cassette 100 disposed in the medication cassette storage unit to the medication cassette unloader 1200 may be formed as an articulated robot so as to access more diverse positions.

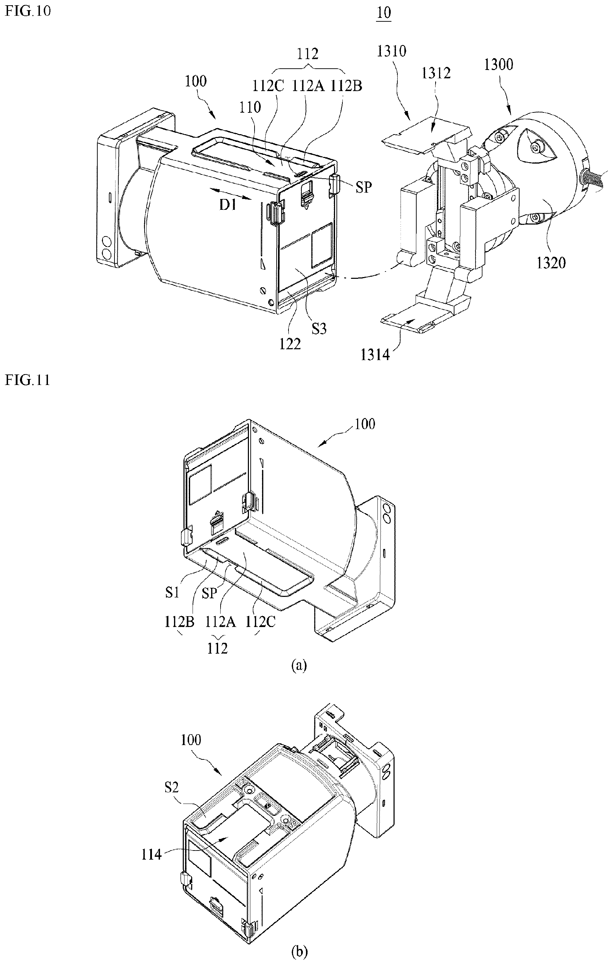

The robot arm 1300 may be oriented in various positions and directions through joints and may be provided with a gripping part 1310 (see FIG. 10) to stably grip the medication cassette 100.

A method of moving the medication cassette 100 by the robot arm 1300 will be described in detail with reference to FIGS. 10 to 16.

The medication collector 1400 may be disposed below the medication cassette unloader 1200 and its position may be moved through a conveyor belt 1410 rotated based on a plurality of axes due to a driving force of a motor or the like.

Here, the medication collector 1400 may include a plurality of medication accommodation pockets 1420. The medication accommodation pocket 1420 may be disposed along a longitudinal direction of the conveyor belt 1410 and may receive a medication passing through the through-hole.

In this case, as shown in the drawings, when the plurality of medication cassettes 100 are disposed on the medication cassette unloader 1200 along a width direction of the conveyor belt 1410, the medication accommodation pocket 1420 may be formed in a structure elongated in the width direction of the conveyor belt 1410 in order to receive all medications from the medication cassettes 100.

The medication collection hopper 1500 may be disposed at a front end of the medication collector 1400 to separate and collect the medications accommodated in the medication accommodation pocket 1420 by a one-time dose.

The medication collection hopper 1500 may be disposed on a front lower side of the medication collector 1400. Thus, the medications accommodated in the medication accommodation pockets are naturally collected in the medication collection hopper 1500 while being moved forward.

Meanwhile, in addition to medications such as tablets or capsules, the automated medication dispensing apparatus 1000 according to the present invention is able to package a medication in powder form by a one-time dose using the medication cassette 100.

To this end, the automated medication dispensing apparatus 1000 according to the present invention may include a powdered medication supply unit 1800. The powdered medication supply unit 1800 may be formed in the form of a tray with partition walls and may be formed to supply powdered medications to the medication collection hopper 1500 through a powdered medication delivery unit 1900.

The medications collected in the medication collection hopper 1500 may be packaged in a pharmaceutical wrapper by a one-time dose by the medication packaging unit 1600 and discharged to the outside, and the medication packaging unit 1600 may be provided with a printer to print patient and/or medication information on a surface of the pharmaceutical wrapper.

In the automated medication dispensing apparatus 1000 according to the present invention, the medication cassette unloader 1200, the medication collector 1400, the medication collection hopper 1500, and the medication packaging unit 1600 may be disposed on both sides around the moving rail 1700, and thus the efficiency of dispensing a medication according to a patient's prescription can be maximized.

## 1. Robot arm control system of automated medication dispensing apparatus and control method thereof

FIG. 5 is a schematic block diagram illustrating the essential components of the automated medication dispensing apparatus 1000 according to one embodiment of the present invention on the basis of the basic structure and operation of the above-described automated medication dispensing apparatus 1000.

The automated medication dispensing apparatus 1000 according to one embodiment of the present invention includes a storage 200, the robot arm 1300, a camera 300, and a control unit 400.

The storage 200 may store programs and data necessary for the operation of the automated medication dispensing apparatus 1000. In one example, the storage 200 may store control information and data for controlling the automated medication dispensing apparatus 1000.

Specifically, the storage 200 may store a mounting position for each of the plurality of medication cassettes 100 in the medication cassette storage unit in which the plurality of racks 1120 on which the plurality of medication cassettes 100 are mounted are arranged, an operation control value of the robot arm 1300 to move to a mounting position of each medication cassette 100, and a reference position of each of the markers attached to the plurality of medication cassettes 100.

Here, the mounting position of each medication cassette 100 is a preset original mounting position to which the robot arm 1300 moves to grip a corresponding medication cassette 100 in the medication cassette storage unit and may include positional information of each rack 1120.

The operation control value refers to a value set to control the robot arm 1300 to move to the mounting position of the medication cassette 100 and set to perform an operation of unloading the medication cassette 100 and moving and loading the unloaded medication cassette 100 to a preset position for dispensing a medication in the medication cassette 100. Here, the preset position may be any one among the plurality of mounting holders 1210 of the medication cassette unloader 1200.

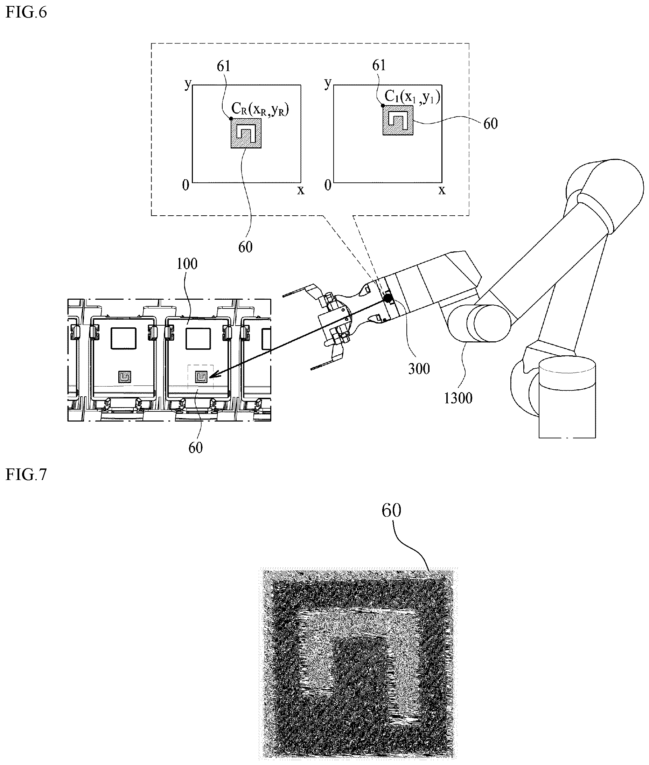

When the medication cassette 100 is outside its original mounting position, the reference position of each of the markers attached to the plurality of medication cassettes 100 may be a value for calculating a position difference value for correcting the operation control value of the robot arm 1300. A detailed description thereof will be made below with reference to FIG. 6.

The storage 200 may be formed as storage media such as a read only memory (ROM), a random access memory (RAM), a hard disk, a compact disc ROM (CD-ROM), and a digital versatile disc (DVD), or a combination thereof.

The robot arm 1300 is for unloading the medication cassette 100 from a rack 1120 arranged in the medication cassette storage unit and may move to the mounting position of the medication cassette 100 to grip and unload the medication cassette 100 and move and load the unloaded medication cassette 100 to the preset position of the medication cassette unloader 1200 for dispensing the medication in the medication cassette 100.

In addition, the robot arm 1300 may be operated to perform a replacement operation of a medication cassette 100 that needs to be replaced with a replacement target medication cassette mounted in the medication cassette unloader 1200.

The robot arm 1300 may be oriented in various positions and directions through joints and may be formed to transfer the medication cassette 100 without changing a vertical orientation of the medication cassette 100. For the above operation, the medication cassette 100 used in the automated medication dispensing apparatus 1000 according to one embodiment of the present invention may be formed to have one or more grooves into which a gripping part is inserted and coupled to stably perform a grip operation of the robot arm 1300.

The camera 300 is a component for capturing the marker attached to the medication cassette 100. According to examples, the camera 300 may be formed as a component attached to a front portion of the robot arm 1300 or may be installed in a direction facing the medication cassette 100 in the automated medication dispensing apparatus 1000.

The control unit 400 controls the overall operation of the automated medication dispensing apparatus 1000.

The control unit 400 may perform an operation of controlling the robot arm 1300 to dispense a medication by unloading the medication cassette 100 or replacing the medication cassette 100 on the basis of the stored mounting position of each medication cassette 100.

In particular, the control unit 400 may calculate a difference value between a stored reference position of the marker and a detected position where the marker is detected in the captured image for at least one medication cassette 100 from which the image of the marker is acquired through the camera 300, correct the operation control value of the robot arm 1300 to correspond to the calculated difference value, and control the robot arm 1300 to move to an actual mounting position of the medication cassette 100. A detailed description thereof will be made below with reference to FIGS. 6 to 8.

FIG. 6 is a diagram for describing a method of correcting an operation control value of a robot arm on the basis of a position of a marker according to one embodiment of the present invention.

FIG. 6 shows an example in which the camera 300 is included in a front portion of the robot arm 1300.

When a command for correcting the operation control value of the robot arm 1300 is input, the control unit 400 may control the robot arm 1300 to move to a mounting position of a medication cassette 100, which is a target of the operation control value correction. In this case, the robot arm 1300 may move according to the mounting position of each medication cassette 100 stored in the storage 200 and the operation control value of the robot arm 1300 for moving to the mounting position.

In this case, the control unit 400 may control the camera 300 to capture one side of the medication cassette 100. In this case, the control unit 400 may recognize and detect a marker 60 included in the captured image input from the camera 300. As an example, the marker 60 may be positioned in a front center portion of the medication cassette 100.

In this case, the marker 60 may include a predetermined pattern as shown in FIG. 7 and may include a pattern typically including a black region and a white region. The marker 60 may include a plurality of color patterns according to embodiments. As representative examples of the marker 60, a quick response (QR) code, a data matrix, augmented reality (AR) Toolkit, and ARTag may be used.

A method of recognizing the marker 60 may be implemented in various ways known in the related art, and since a person skilled in the art can implement the method without much difficulty, a detailed description thereof will be omitted. For example, the control unit 400 may binarize the contrast of the captured image using a threshold, group dark regions to determine whether the grouped region is a quadrangular shape, and detect a marker 60 having a quadrangular edge.

In this case, the control unit 400 may more accurately detect the marker 60 by recognizing a pattern in the marker 60.

The control unit 400 may recognize a pattern of the marker 60 using edge information and color information on the detected marker 60 and detect a pattern identification (ID) of the recognized marker 60. In this case, the detected pattern ID may be used to extract specific information such as information on medications accommodated in the medication cassette 100.

As shown in FIG. 6, the control unit 400 may calculate a difference value between the reference position of the marker 60 stored in the storage 200 and the detected position of the marker 60 in the captured image for at least one medication cassette 100 from which the captured image of the marker 60 is acquired through the camera 300.

Specifically, the control unit 400 may calculate the difference value on the basis of pixel coordinates of one predetermined point of the marker 60. Referring to FIG. 6, in an example in which an edge of the marker 60 has a quadrangular shape, one predetermined point of the marker 60 may be set to any one point 61 of the four vertexes of the marker 60.

In the reference position to which the marker 60 is attached in the medication cassette 100 stored in the storage 200, a position $C_R$ of one predetermined point 61 may be expressed as two-dimensional pixel coordinates $(x_R, y_R)$. In this case, when the medication cassette 100 is normally mounted at an originally set mounting position, the pixel coordinates $(x_R, y_R)$ may be a value obtained by converting the position of the marker 60 into pixel coordinates in the image captured by the camera 300.

Here, the case in which the medication cassette 100 is normally mounted at the originally set mounting position may be a case in which the medication cassette 100 is accurately mounted without error at a position to which the robot arm 1300 moves according to the stored operation control value in order to grip the medication cassette 100.

Alternatively, as another example, the storage 200 may store a reference image capturing at least one medication cassette 100 which is normally mounted at the originally set mounting position. In this case, the control unit 400 may extract the pixel coordinates $(x_R, y_R)$ of the marker 60 in the stored reference image.

A position $C_1$ of the same point 61 of the marker 60 detected in the captured image may be expressed as two-dimensional pixel coordinates $(x_1, y_1)$.

In this case, the calculated difference value $(\Delta x, \Delta y)$ between the reference position and the detected position of the marker 60 is as follows.

$$[Equation\ 1]$$
$$(\Delta x, \Delta y) = (x_1 - x_R, y_1 - y_R)$$

The control unit 400 may correct the operation control value of the robot arm 1300 to correspond to the difference value $(\Delta x, \Delta y)$ calculated by Equation 1 and control the robot arm 1300 to move to an actual mounting position of the medication cassette 100, which is outside the originally set position of the medication cassette 100.

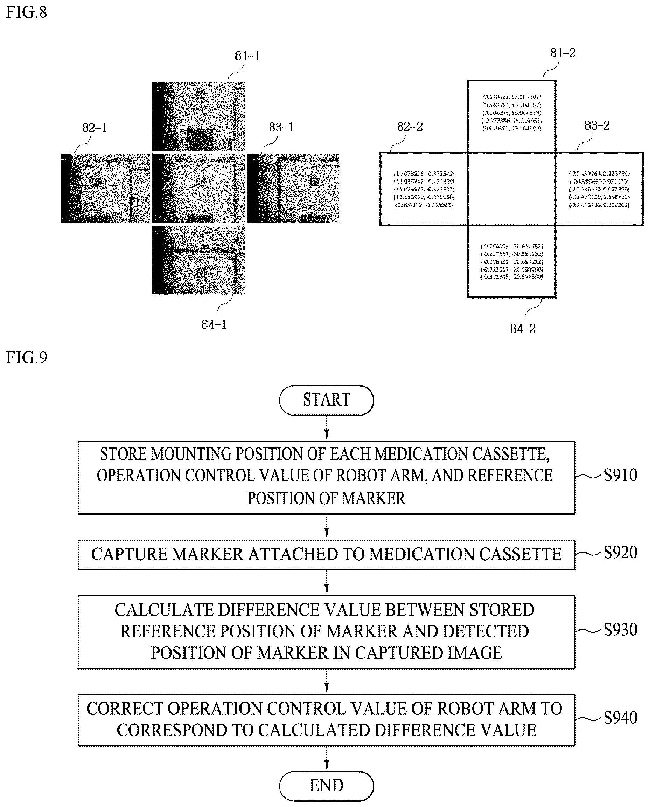

FIG. 8 is a diagram illustrating an example of a result of calculating a difference value between a reference position and a detected position of the marker multiple times according to one embodiment of the present invention.

In FIG. 8, a captured image in the middle indicates a reference image of the medication cassette 100 normally mounted in the original mounting position, a captured image 81-1 at the top indicates a captured image of the medication cassette 100 slightly pushed upward from the original mounting position, a captured image 82-1 on the left indicates a captured image of the medication cassette 100 slightly pushed to the left from the original mounting position, a captured image 83-1 on the right indicates a captured image of the medication cassette 100 slightly pushed to the right from the original mounting position, and a captured image 84-1 at the bottom indicates a captured image of the medication cassette 100 slightly pushed downward from the original mounting position.

The control unit 400 may compare a position of the marker 60 in each of the captured images 81-1, 82-1, 83-1, and 84-1 with the stored reference image of the marker 60 and calculate difference values 81-2, 82-2, 83-2, and 84-2 as shown in FIG. 8.

Alternatively, the markers 60 attached to the plurality of medication cassettes 100 may be included in the image captured by the camera 300. In this case, the control unit 400 may calculate a difference value ($\Delta x = x_n - x_r$, $\Delta y = y_n - y_r$) between the reference position ($x_r$, $y_r$) and the detected position ($x_n$, $y_n$) for the markers 60 attached to the plurality of medication cassettes 100 included in the captured image, thereby collectively correcting the operation control values of the robot arm 1300 for moving to the mounting positions of the plurality of medication cassettes 100 included in the captured image.

Meanwhile, a frame 2000 which fixes the plurality of racks 1120 in the medication cassette storage unit may be bent or a position thereof may be changed due to a load. Thus, a problem may occur in which the mounting positions of tens or hundreds of medication cassettes 100 are outside originally set mounting positions at one time.

According to another embodiment of the present invention for solving the above problem, in the frame 2000 which fixes the plurality of racks 1120 of the medication cassette storage unit, a marker 60 (hereinafter referred to as a frame marker) may be attached to one region or a plurality of regions of the frame 2000.

In this case, the storage 200 may store a reference position at which the frame marker 60 is attached to the frame 2000, and the control unit 400 may control the camera 300 to capture the frame marker 60.

The control unit 400 may calculate a difference value between the reference position of the frame marker 60 stored in the storage 200 and a detected position where the frame marker 60 is detected in the captured image and correct the operation control value of the robot arm 1300 to correspond to the calculated difference value.

Accordingly, even when the position of the frame 2000 of the medication cassette storage unit is changed, the operation control value of the robot arm 1300 is corrected according to the position change of the frame 2000 without manually correcting the operation control value of the robot arm 1300 for the medication cassette 100 so that the robot arm 1300 may move to the actual mounting position of the medication cassette 100.

In addition, the control unit 400 may control the frame marker 60 to be captured only when the number of medication cassettes 100 having a difference value calculated for the marker 60 that is greater than or equal to a preset difference value is greater than or equal to a preset number.

That is, when a predetermined number or more of the medication cassettes 100 are outside the original mounting positions by more than a certain difference value, since there is a high possibility that the position of the frame 2000 has changed, the control unit 400 may correct the operation control value of the robot arm 1300 according to the position change of the frame 2000 only in the above case.

Meanwhile, the medication cassette 100 of the present invention may include a memory (not shown) in which medication data on a medication accommodated in the medication cassette 100 is stored, and the medication data stored in the memory may be read through a data reading module (not shown) in each of the plurality of mounting holders 1210 included in the medication cassette unloader 1200. In this case, the medication data stored in the medication cassette 100 may be data previously input by an administrator through a separate interface (not shown).

Specifically, the control unit 400 may move the unloaded medication cassette 100 through the robot arm 1300 to one of the plurality of mounting holders 1210 included in the medication cassette unloader 1200 and load the medication cassette 100 into the mounting holder 1210. In this case, the control unit 400 may control the data reading module included in the mounting holder 1210 on which the medication cassette 100 is mounted to read the medication data stored in the memory of the medication cassette 100.

The control unit 400 may match the mounting position of the unloaded medication cassette 100 in the medication cassette storage unit with the medication data read from the data reading module and control the storage 200 to store the matching result.

Thus, a necessary medication cassette 100 may be unloaded according to an input prescription using information on the medication accommodated in each medication cassette 100 in the medication cassette storage unit and information on the mounting position of each medication cassette 100.

Alternatively, according to another example of the present invention, the control unit 400 may more quickly read the medication data stored in the memory of the medication cassette 100 through image recognition through the camera 300 or a non-contact method using a wireless signal.

Specifically, the control unit 400 may read the medication data stored in the memory of the medication cassette 100 while moving the robot arm 1300 in front of the medication cassette storage unit in a non-contact manner in which a separate ID code attached to the medication cassette 100 is recognized through the camera 300 installed in the robot arm 1300.

Here, the ID code may be implemented as a two-dimensional bar code including a QR code, PDF-147, a data matrix, MaxiCode, or the like, but the present invention is not limited thereto.

Alternatively, the control unit 400 may read the medication data stored in the memory of the medication cassette 100 while moving the robot arm 1300 in front of the medication cassette storage unit in a non-contact manner in which a radio frequency ID (RFID) tag attached to the medication cassette 100 is recognized through an RFID tag reader (not shown) attached to the robot arm 1300.

The control unit 400 may match the read medication data with the mounting position of the medication cassette 100 and control the storage 200 to store the matching result.

FIG. 9 is a schematic flowchart for describing a control method of an automated medication dispensing apparatus according to one embodiment of the present invention.

First, a mounting position of each medication cassette, an operation control value of a robot arm for moving to the mounting position, and a reference position at which a marker is attached to each medication cassette in a medication cassette storage unit where a plurality of racks, in which a plurality of medication cassettes with markers are mounted, are arranged are stored (S910).

Then, the marker attached to the medication cassette is captured through a camera (S920).

A difference value between a stored reference position of the marker and a detected position of the marker in the captured image is calculated for at least one medication cassette in which the image of the marker is captured by the camera (S930).

In this case, for one predetermined point of the marker, a difference value ($\Delta x = x_2 - x_r$, $\Delta y = y_2 - y_r$) may be calculated on the basis of pixel coordinates ($x_r$, $y_r$) of a reference position in a reference image and pixel coordinates ($x_2$, $y_2$) of the detected position in the captured image. When an edge of the marker has a quadrangular shape, the one predetermined point of the marker may be set to any one among four vertexes of the marker.

The operation control value of the robot arm is corrected to correspond to the calculated difference value, and the robot arm moves to an actual mounting position of the medication cassette (S940).

Meanwhile, the medication cassette storage unit may include a frame which fixes a plurality of racks, and at least one frame marker may be attached to the frame.

In this case, a reference position at which the frame marker is attached to the frame may be further stored. When it is determined that the number of medication cassettes having a difference value, which is calculated with respect to the stored reference position and the stored detected position of the marker, is greater than or equal to a preset difference value, is a preset number or more, the frame marker attached to the frame may be captured.

When the frame marker is captured by the camera, a difference value between the stored reference position of the frame marker and the detected position where the frame marker is detected in the captured image may be calculated, and the operation control value of the robot arm may be corrected to correspond to the calculated difference value.

Hereinafter, a method of moving the medication cassette 100 positioned in the medication cassette storage unit to the medication cassette unloader 1200 by the robot arm 1300 for dispensing medications will be described in detail.

## 2. Mutual coupling structure for movement of medication cassette

FIG. 10 is a diagram for describing a mutual coupling structure for movement of the medication cassette provided in the automated medication dispensing apparatus according to the present invention.

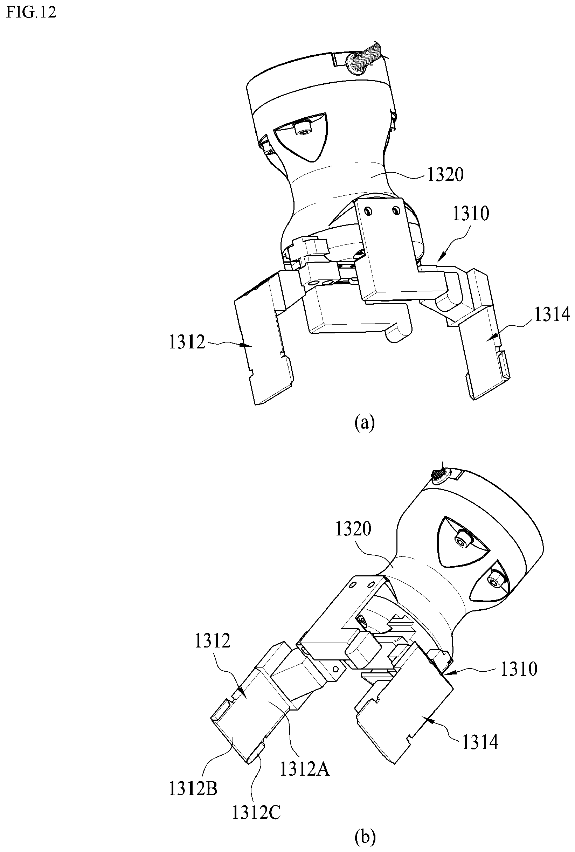

In addition, FIG. 11 is a diagram for describing the medication cassette provided in the mutual coupling structure for movement of the medication cassette according to the present invention, and FIG. 12 is a diagram for describing the robot arm provided in the mutual coupling structure for movement of the medication cassette according to the present invention.

The automated medication dispensing apparatus 1000 described with reference to FIGS. 1 to 4 may include a mutual coupling structure 10 for movement of the medication cassette.

Referring to FIGS. 10 to 12, the mutual coupling structure 10 for movement of the medication cassette according to the present invention may be a structure which moves the medication cassette 100 positioned at a first position to a second position to implement a specific purpose.

For example, the first position may be the medication cassette storage unit 1100, and the second position may be the medication cassette mounting unloader 1200, and the specific purpose may refer to a dispensing operation of a medication accommodated in the medication cassette 100 on the basis of a patient's prescription.

The mutual coupling structure 10 for movement of the medication cassette may include the medication cassette 100 and the robot arm 1300.

As described with reference to FIGS. 1 to 4, the medication cassette 100 may be a cassette accommodating medications such as tablets or capsules.

The robot arm 1300 is a part for moving the medication cassette 100, which grips the medication cassette 100 positioned at the first position and then moves the gripped medication cassette 100 to the second position after and may be formed as an articulated robot (see FIG. 1).

The robot arm 1300 may include one or more joints and thus may be oriented in various positions and directions.

A gripped portion 110 may be provided on an outer surface of the medication cassette 100 to allow the robot arm 1300 to grip the medication cassette 100.

The gripped portion 110 may include a first gripped portion 112 and a second gripped portion 114 formed on a first outer surface S1 and a second outer surface S2 opposite to the first outer surface S1, respectively.

Here, the robot arm 1300 may include a gripping part 1310 which moves in position toward the gripped portion 110 to grip the gripped portion 110, and a support 1320 which supports the gripping part 1310 and allows the gripping part 1310 to approach the medication cassette 100.

The gripping part 1310 may include a first gripper 1312 and a second gripper 1314 whose positions are moved toward the first gripped portion 112 and the second gripped portion 114, respectively.

Meanwhile, the robot arm 1300 approaches the medication cassette 100 positioned at the first position and then enables a fine position adjustment of the medication cassette 100 in the process of griping the gripped portion 110, thereby implementing the grip at a home position. This is implemented by an interaction, which will be described below, of the gripping part 1310 and the gripped portion 110.

Hereinafter, in describing the interaction of the gripping part 1310 and the gripped portion 110 and an effect of the interaction, an example of an interaction of the first gripper 1312 and the first gripped portion 112 and an effect of the interaction will be described, and it is noted that the description will be equally applied to the second gripper 1314 and the second gripped portion 114.

The first gripped portion 112 may include a seating surface 112A, first boundary protrusions 112B, and first auxiliary protrusions 112C.

The seating surface 112A may be a predetermined region on the first outer surface S1 to which the position of the first gripper 1312 is moved to be seated, and the first boundary protrusions 112B may be protrusions which define a boundary of the seating surface 112A and protrude from the first outer surface S1 to implement an effect of allowing the first gripper 1312 to be inserted therebetween and seated on the seating surface 112A.

In addition, the first auxiliary protrusions 112C may be protrusions which protrude from positions spaced apart from the first boundary protrusions 112B to allow insertion spaces SP to be formed between the first boundary protrusions 112B.

The first gripper 1312 may include an upper contact portion 1312A in contact with the seating surface 112A positioned between the first boundary protrusions 112B, a lower contact portion 1312B integrally formed with the upper contact portion 1312A and in contact with the seating surface 112A positioned between the insertion spaces SP, and wings 1312C integrally formed with the lower contact portion 1312B and seated in the insertion spaces SP.

When the wing 1312C is seated in the insertion space SP, positional movement of the wing 1312C in a vertical direction D1 may be limited by the first boundary protrusion 112B and the first auxiliary protrusion 112C. Thus, stable fixation of the medication cassette 100 by the robot arm 1300 may be possible.

Meanwhile, in the process of gripping the first gripped portion 112 of the medication cassette 100 by the gripping part 1310 of the robot arm 1300, fine position adjustment of the medication cassette 100 may be implemented by the interaction of the gripping part 1310 and the first gripped portion 112, as described above. This may be implemented by an interaction of one surface on which the first boundary protrusion 112B comes into contact with the upper contact portion 1312A, an interaction of one surface on which the first boundary protrusion 112B comes into contact with the wing 1312C, or an interaction of one surface on which the wing 1312C comes into contact with the first auxiliary protrusion 112C.

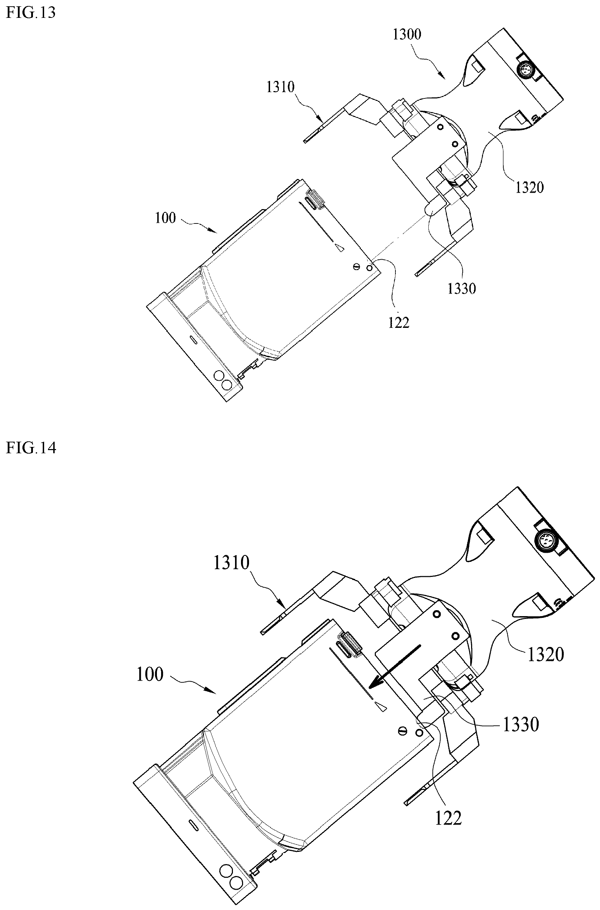

FIGS. 13 to 15 are diagrams for describing a situation in which the robot arm approaches and grips the medication cassette.

Referring to FIGS. 13 to 15, in order to move the medication cassette 100 disposed in the medication cassette storage unit, which is the first position, to the medication cassette unloader 1200, which is the second position, the robot arm 1300 approaches the medication cassette 100.

Here, the robot arm 1300 may move along the moving rail 1700 and may be fixed at an optimal position.

As shown in FIG. 14, a guide 1330 is inserted into a guide groove 122 (see FIG. 10) so that the approach of the robot arm 1300 to the medication cassette 100 is completed.

Here, the guide 1330 is a component of the robot arm 1300, and may be a component inserted into the guide groove 122, which is formed on a cover surface S3 (see FIG. 10) of the medication cassette 100, to guide a final position at which the support 1320 should approach the medication cassette 100.

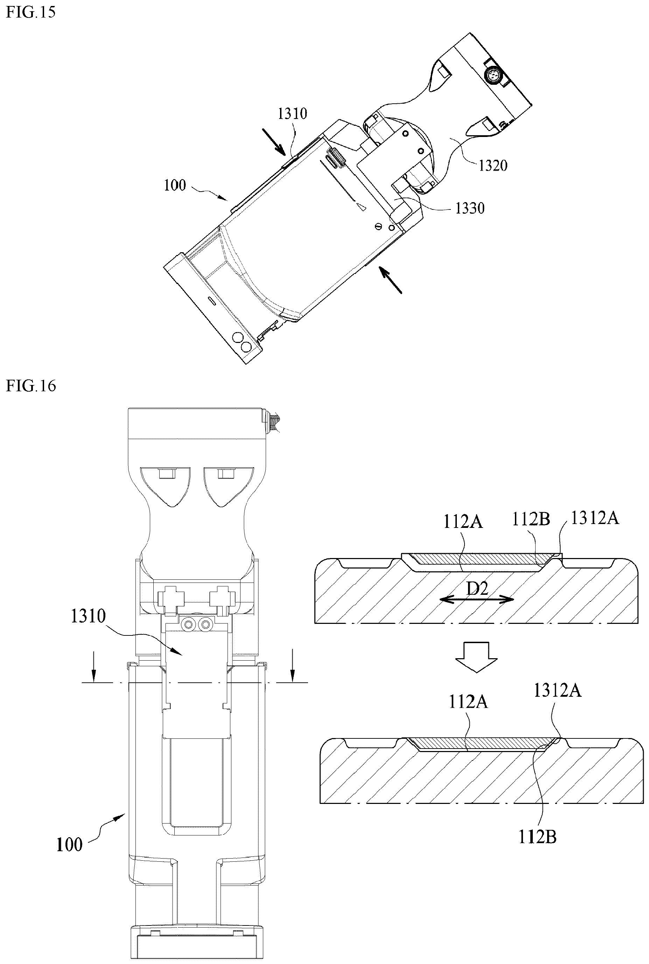

When the approach of the robot arm 1300 to the medication cassette 100 is completed, as shown in FIG. 15, the positional movement of the gripping part 1310 is performed based on the support 1320, and thus the gripping part 1310 grips the first gripped portion 112.

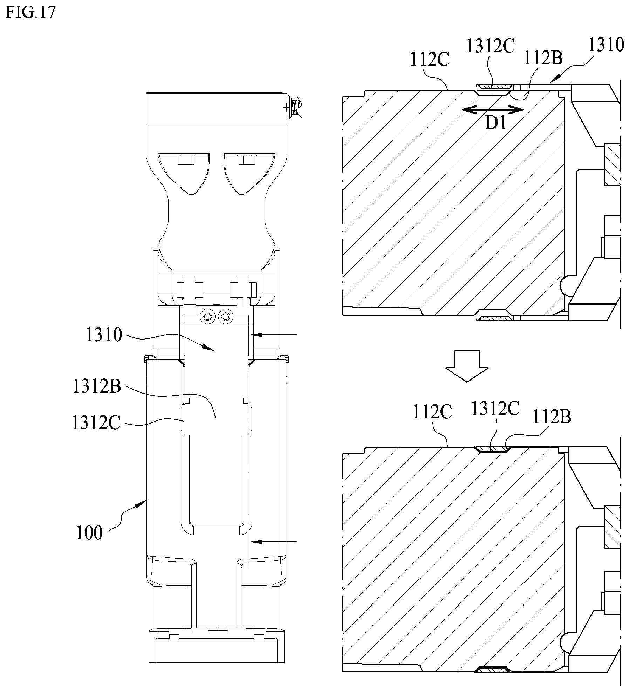

FIGS. 16 and 17 are diagrams for describing a situation in which a position of the medication cassette is finely adjusted when the medication cassette is gripped by the robot arm.

Referring to FIG. 16, when the medication cassette 100 positioned in the medication cassette storage unit, which is the first position, is not positioned at the home position, a slight error occurs during a process in which the gripping part 1310 moves toward the first gripped portion 112.

Here, during the process in which the gripping part 1310 moves toward the first gripped portion 112, the first boundary protrusion 112B comes into contact with the upper contact portion 1312A. Since one surfaces in contact with each other are formed to be inclined, fine position adjustment in a left-right direction D2 of the medication cassette 100 is possible, and thus the grip of the gripping part 1310 with respect to the first gripped portion 112 is implemented at the home position.

In other words, since the one surfaces, on which the first boundary protrusion 112B comes into contact with the upper contact portion 1312A, are formed to be inclined in a direction in which the upper contact portion 1312A is seated on the seating surface 112A, fine position adjustment of the medication cassette 100 is possible in the left-right direction D2 during the process in which the gripping part 1310 grips the first gripped portion 112 by contact.

Referring to FIG. 17, when the medication cassette 100 positioned in the medication cassette storage unit, which is the first position, is not positioned at the home position, as in FIG. 16, a slight error occurs during a process in which the gripping part 1310 moves toward the first gripped portion 112.

Here, during the process in which the gripping part 1310 moves toward the first gripped portion 112, the first boundary protrusion 112B comes into contact with the wing 1312C. Since one surfaces in contact with each other are formed to be inclined, fine position adjustment in the vertical direction D1 of the medication cassette 100 is possible, and thus the grip of the gripping part 1310 with respect to the first gripped portion 112 is implemented at the home position.

In other words, since one surfaces, on which the first boundary protrusion 112B comes into contact with the wing 1312C, are formed to be inclined in a direction in which the lower contact portion 1312B is seated on the seating surface 112A, fine position adjustment of the medication cassette 100 is possible in the vertical direction D1 during the process in which the gripping part 1310 grips the first gripped portion 112 by contact.

Meanwhile, when the medication cassette 100 is in a state opposite to the state shown in FIG. 17, that is, is tilted upward, during the process in which the gripping part 1310 moves toward the first gripped portion 112, the first auxiliary protrusion 112C comes into contact with the wing 1312C. Since one surfaces in contact with each other are formed to be inclined, fine position adjustment of the medication cassette 100 is possible in the vertical direction D1, and thus the grip of the gripping part 1310 with respect to the first gripped portion 112 is implemented at the home position.

In other words, since the one surfaces, on which the wing 1312C comes into contact with the first auxiliary protrusion 112C, are formed to be inclined in the direction in which the lower contact portion 1312B is seated on the seating surface 112A, fine position adjustment of the medication cassette 100 is possible in the vertical direction D1 during the process in which the gripping part 1310 grips the first gripped portion 112 by contact.

As described above, according to the mutual coupling structure 10 for movement of the medication cassette according to the present invention, even when the position of the medication cassette 100 positioned in the medication cassette storage unit, which is the first position, is not the home position, since the fine position adjustment of the medication cassette 100 is possible during the process in which the gripping part 1310 grips the first gripped portion 112, the grip is automatically implemented at the home position.

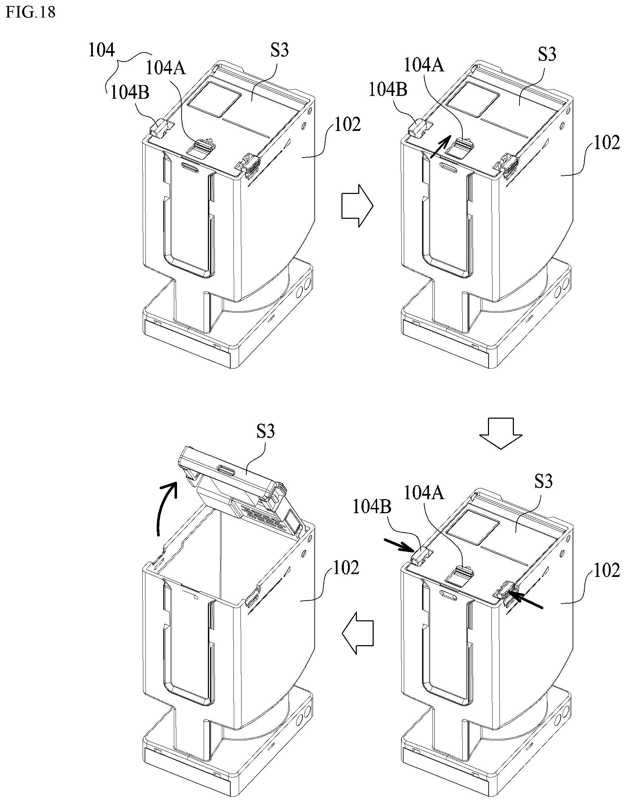

FIG. 18 is a diagram for describing a pivoting principle of a cover surface of the medication cassette provided in the mutual coupling structure for moving the medication cassette according to the present invention.

Referring to FIG. 18, the cover surface S3 of the medication cassette 100 may be pivoted based on a main body 102 to open an upper portion of the medication cassette 100 for refilling.

Here, the pivoting of the cover surface S3 is possible when a double locking part 104 is released, and primarily, a first lock 104A is retracted to release the engagement with the main body 102, and secondarily, an external force is applied to a second lock 104B to release the engagement with the main body 102.

As described above, according to various embodiments of the present invention, the robot arm performs a grip operation on the medication cassette at a position different from an actual position so that it is possible to prevent a problem in that the medication cassette is not properly gripped to omit a corresponding medication or the medication cassette or rack is damaged.

In addition, when the position of the medication cassette is moved by the robot arm in order to dispense medications according to the prescription, the robot arm is fixed to an exact position of the medication cassette so that it is possible to prevent the medication cassette from falling in advance which may occur during the movement of the medication cassette by the robot arm.

In addition, the medication cassette is fixed to an accurate position of the robot arm to be accurately positioned at a storage position of the medication cassette and at an unloading position of the medication cassette for medication dispensing so that accurate medication dispensing according to the prescription may be implemented.

Meanwhile, the method of controlling the robot arm of the automated medication dispensing apparatus according to the above-described various embodiments may be implemented as a program and stored in various recording media. That is, a computer program which is executed by various processors and is capable of executing the above-described method of controlling the robot arm of the automated medication dispensing apparatus may be used in a state of being stored in a recording medium.

As an example, a non-transitory computer readable medium may be provided, which stores a program for executing: i) storing a mounting position of each medication cassette, an operation control value of the robot arm for moving to the mounting position, and a reference position at which the marker is attached to each medication cassette in the medication cassette storage unit where the plurality of racks in which the plurality of medication cassettes with markers are mounted; ii) capturing the marker attached to the medication cassette through the camera; iii) calculating a difference value between a stored reference position of the marker and a detected position of the marker in the captured image for at least one medication cassette in which the image of the marker is captured by the camera; and iv) correcting the operation control value of the robot arm to correspond to the calculated difference value and moving the robot arm to an actual mounting position of the medication cassette.

The non-transitory computer readable medium refers to a medium which stores data semi-permanently and is readable by a device instead of a medium which stores data for a short period of time, such as a register, a cache, or a memory. Specifically, the above-described various applications or programs may be stored and provided in a non-transitory readable medium such as a CD, a DVD, a hard disk, a Blu-ray disc, a universal serial bus (USB), a memory card, or a ROM.

In accordance with various embodiments of the present invention, a robot arm performs a grip operation on a medication cassette at a position different from an actual position so that it is possible to prevent a problem in that the medication cassette is not properly gripped to omit a corresponding medication or the medication cassette or the rack is damaged.

In addition, when the position of the medication cassette is moved by the robot arm in order to dispense medications according to the prescription, the robot arm is fixed to an exact position of the medication cassette so that it is possible to prevent the medication cassette from falling in advance which can occur during the movement of the medication cassette by the robot arm.

In addition, the medication cassette is fixed to an accurate position of the robot arm to be accurately positioned at a storage position of the medication cassette and at an unloading position of the medication cassette for medication dispensing so that accurate medication dispensing according to the prescription can be implemented.

Although the exemplary embodiments of the present invention has been shown and described, the present invention is not limited to the above-described specific embodiments. In addition, various modifications can be implemented by those skilled in the art to which the present invention pertains without departing from the gist of the present invention described in the appended claims, and these modifications should not be individually construed from the technical spirit or prospective of the present invention.

**Claims**

1. A robot arm control system of an automated medication dispensing apparatus, comprising:

   a robot arm;
   a storage configured to store a mounting position of each of a plurality of medication cassettes, an operation control value of the robot arm for moving to the mounting position, and a reference position at which the marker is attached to each medication cassette in a medication cassette storage unit where a plurality of racks in which the plurality of medication cassettes with markers attached thereto are mounted are arranged;
   a camera configured to capture the marker attached to the medication cassette; and
   a control unit configured to control the robot arm to move to a mounting position of any one among the medication cassettes to unload the medication cassette and control the robot arm to move and insert the unloaded medication cassette at a predetermined position for dispensing a medication in the unloaded medication cassette on the basis of the stored mounting position of each medication cassette,
   wherein the control unit calculates a difference value between a stored reference position of the marker and a detected position of the marker in the captured image for at least one medication cassette in which the image of the marker is captured by the camera, corrects the operation control value of the robot arm to correspond to the calculated difference value, and controls the robot arm to move to an actual mounting position of the medication cassette.

2. The robot arm control system of claim 1, wherein the control unit calculate a difference value ($\Delta x = x_2 - x_r$, $\Delta y = y_2 - y_r$) for one predetermined point of the marker on the basis of pixel coordinates ($x_r$, $y_r$) of a reference position in a reference image and pixel coordinates ($x_2$, $y_2$) of the detected position in the captured image.

3. The robot arm control system of claim 2, wherein the one predetermined point of the marker is any one among four vertexes of the marker when an edge of the marker has a quadrangular shape.

4. The robot arm control system of claim 1, wherein:

the medication cassette storage unit includes a frame which fixes the plurality of racks and to which at least one frame marker is attached;

the storage further stores a reference position at which the frame marker is attached to the frame; and

the control unit captures the frame marker through the camera, calculates a difference value between the stored reference position of the frame marker and a detected position at which the frame marker is detected in the captured image, and corrects the operation control value of the robot arm to correspond to the calculated difference value.

5. The robot arm control system of claim 4, wherein the control unit captures the frame marker only when the number of medication cassettes having a calculated difference value that is a predetermined difference value or more is greater than or equal to a predetermined number, and corrects the operation control value of the robot arm according to a position change of the frame.

6. The robot arm control system of claim 1, wherein, when the unloaded medication cassette is moved to and inserted into one of a plurality of mounting holders included in a medication cassette unloader for discharging a medication accommodated in the medication cassette, the control unit controls a reading module included in the mounting holder to read medication data stored in a memory in the medication cassette, matches the mounting position of the medication cassette in the medication cassette storage unit with the read medication data, and stores the matching result.

7. The robot arm control system of claim 1, wherein the control unit recognizes an identification (ID) code attached to the medication cassette through the camera or reads medication data stored in a memory of the medication cassette in a non-contact manner in which a radio-frequency ID (RFID) tag attached to the medication cassette is recognized through an RFID tag reader attached to the robot arm, and matches the mounting position of the medication cassette with the read medication data to store the matching result.

8. A method of controlling a robot arm of an automated medication dispensing apparatus, the method comprising:

storing a mounting position of each of a plurality of medication cassettes, an operation control value of the robot arm for moving to the mounting position and unloading the medication cassette, and a reference position at which the marker is attached to each medication cassette in a medication cassette storage unit where a plurality of racks in which the plurality of medication cassettes with markers attached thereto are mounted are arranged;

capturing the marker attached to the medication cassette through a camera;

calculating a difference value between a stored reference position of the marker and a detected position of the marker in the captured image for at least one medication cassette in which the image of the marker is captured by the camera; and

correcting the operation control value of the robot arm to correspond to the calculated difference value and moving the robot arm to an actual mounting position of the medication cassette.

9. The method of claim 8, wherein the calculating of the difference value includes calculating a difference value ($\Delta x=x_2-x_r$, $\Delta y=y_2-y_r$) for one predetermined point of the marker on the basis of pixel coordinates ($x_r$, $y_r$) of a reference position in a reference image and pixel coordinates ($x_2$, $y_2$) of the detected position in the captured image.

10. The method of claim 9, wherein the one predetermined point of the marker is any one among four vertexes of the marker when an edge of the marker has a quadrangular shape.

11. The method of claim 8, wherein the medication cassette storage unit includes a frame which fixes the plurality of racks and to which at least one frame marker is attached,

wherein the method further includes:

storing a reference position at which the frame marker is attached to the frame;
capturing the frame marker through the camera;
calculating a difference value between the stored reference position of the frame marker and a detected position at which the frame marker is detected in the captured image; and
correcting the operation control value of the robot arm to correspond to the calculated difference value.

12. The method of claim 11, wherein the capturing of the frame marker includes capturing the frame marker only when the number of medication cassettes having a calculated difference value that is a predetermined difference value or more is greater than or equal to a predetermined number.

13. A computer program product comprising a recording medium storing a program for executing the method of controlling a robot arm according to any one of claims 8 to 12.

FIG.1

1000

FIG.2

FIG.3

FIG.4

FIG.5

FIG.6

FIG.7

FIG.8

FIG.9

START

STORE MOUNTING POSITION OF EACH MEDICATION CASSETTE, OPERATION CONTROL VALUE OF ROBOT ARM, AND REFERENCE POSITION OF MARKER — S910

CAPTURE MARKER ATTACHED TO MEDICATION CASSETTE — S920

CALCULATE DIFFERENCE VALUE BETWEEN STORED REFERENCE POSITION OF MARKER AND DETECTED POSITION OF MARKER IN CAPTURED IMAGE — S930

CORRECT OPERATION CONTROL VALUE OF ROBOT ARM TO CORRESPOND TO CALCULATED DIFFERENCE VALUE — S940

END

FIG.10

100

112
112C 112A 112B

110

1310 1312 1300

D1

SP

10

S3

122

1320

1314

FIG.11

100

S1 SP

112B 112A 112C

112

(a)

100

S2

114

(b)

FIG.12

(a)

(b)

FIG.13

FIG.14

FIG.15

FIG.16

FIG.17

FIG.18

Europäisches
Patentamt

European
Patent Office

Office européen
des brevets

# EUROPEAN SEARCH REPORT

Application Number

EP 23 15 6255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/292015 A1 (KIM JUN-HO [KR]) 23 September 2021 (2021-09-23) * paragraph [0002] * * paragraph [0042] – paragraph [0086] * * figures 2-9 * | 1-11,13 | INV. B25J9/16 |
| Y | JP 2001 300875 A (DENSO CORP) 30 October 2001 (2001-10-30) * the whole document * | 1-11,13 | |
| A | US 2019/232406 A1 (PREDKI THOMAS [DE]) 1 August 2019 (2019-08-01) * paragraph [0002] – paragraph [0006] * * paragraph [0041] * * paragraph [0059] – paragraph [0072] * * figures 1-6 * | 1-13 | |
| | | | TECHNICAL FIELDS SEARCHED (IPC) B25J G05B A61J B65B |

The present search report has been drawn up for all claims

| Place of search | Date of completion of the search | Examiner |
|---|---|---|
| Munich | 2 June 2023 | Gardella, Simone |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

    ..............................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 23 15 6255

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2023

| Patent document cited in search report | | Publication date | Patent family member(s) | | Publication date |
|---|---|---|---|---|---|
| US 2021292015 | A1 | 23-09-2021 | CN | 113493012 A | 12-10-2021 |
| | | | EP | 3882876 A1 | 22-09-2021 |
| | | | KR | 20210117097 A | 28-09-2021 |
| | | | US | 2021292015 A1 | 23-09-2021 |
| JP 2001300875 | A | 30-10-2001 | NONE | | |
| US 2019232406 | A1 | 01-08-2019 | EP | 3518058 A1 | 31-07-2019 |
| | | | US | 2019232406 A1 | 01-08-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20220018483
- KR 20220025231

- KR 1020180117932